# EUROPEAN PATENT APPLICATION

(11) **EP 3 313 048 A1**
(43) Date of publication of application: **25.04.2018**
(21) Application number: 16306373.8
(22) Date of filing: 20.10.2016
(51) Int. Cl.: H04L 29/08

(54) **METHOD AND DEVICE FOR ROUTING A REQUEST**

(71) Applicant: Alcatel Lucent, 91620 Nozay (FR)
(72) Inventor: SWINDELLS, Thomas, Milton, Cambridgeshire CB24 6DD (GB)
(74) Representative: Nokia Bell Patent Attorneys

(57) **Abstract**

Embodiments relate to a method for routing a request (RQ) in a network comprising a plurality of server devices (4) configured for processing said request, executed by a request routing device (3), comprising:
- receiving (S1) a request (RQ) from a client device (2), wherein said request is associated with a request type out of a plurality of request types, wherein different load level thresholds are associated with respective request types,
- for one or more server devices (4), determining (S3) whether said server device (4) is available for processing said request in function of a comparison between a load level of said server device and a load level threshold associated with said request type,
- controlling (54) routing of the request to one of the server devices for which it has been determined that said server device is available for processing said request.

## Description

### FIELD OF THE INVENTION

The present invention relates to the field of telecommunication. In particular, the present invention relates to a method and a device for routing a request in a content distribution network.

### BACKGROUND

In a content distribution network (CDN), a content server is responsible for delivering content, for example video services over HTTP. A content server may be delivering multiple distinctive services at the same time, and an operator may place different values and priorities on each service.

Typically, multiple groups of content servers (known as Points of Presence - POPS) will be deployed in the network. One ('edge') group may be close to the end user and is therefore the preferred location to have the users request content from, while another ('central') group may be located further away from the user and therefore likely to provide a slower or lower quality connection. When a client wants to start a new connection to the CDN it first contacts a request routing component. The request routing component determines which is the 'best' content server for the client to connect to, based upon the client location and the service it is requesting.

When sufficient capacity is available, the operator desires all services to be delivered as fast as possible from the closest content server to the user. When there is not enough capacity in the edge group some requests need to be handled by the central group of content servers. The ideal aim is to ensure as much of higher priority traffic as possible is kept being served from the edge group, with the lower priority traffic being directed to the central group.

The capacity of a content server is normally determined by the load placed on a subcomponent of the system. This could be for example CPU utilization, network bandwidth utilization or disk utilization. When a content server reaches a nominal '100%' threshold of one of these factors, the content server would be considered busy or overloaded and additional connections are likely to cause a reduction in the quality of service that the machine is providing. Thus, the request routing will no longer send new connections to that content server. If all the content servers in a group are busy then the request router will direct the client to a content server in a different group which will be further away.

There are known techniques for request routing of requests from clients to content servers in a CDN.

A first solution is to attempt to size a group so that it provides sufficient capacity for all the demand. When this isn't possible (or proves insufficient) new connections for all services will be directed to the more central group, whilst the edge group will egress traffic in approximate equal ratio to the demand without any prioritization based upon service.

A second approach is to set a maximum egress threshold for all the lower priority traffic. During periods of high demand this ensures that throughput is reserved for the higher priority traffic. If the threshold is set low enough such that there is always sufficient bandwidth for the higher priority traffic the end effect is achieved, however if the threshold is set too high the desired effect is not achieved, lower priority traffic will still be directed to the edge content server whilst higher priority traffic is directed to the central group. If a low threshold is set, during periods of low demand for the high priority service the behavior is also undesirable; new low priority connections will be directed to the central group once the threshold has been passed, even if it could have been served from the edge content server without preventing the acceptance of high priority traffic.

A third approach is to monitor the numbers of high and lower priority connections currently active on a content server. If a threshold in the number of connections is reached only higher priority connections are directed to the content server. This assumes that all connections place an equal and consistent load on the system. In real deployments the number of connections and the load on a subsystem (such as the disk) are only loosely correlated, the lower priority service may place less demand on the hardware resources due to differences in the type and popularity of the content being requested. Prioritization based upon connection counting is therefore suboptimal, it may artificially prevent a content server from taking as much load as it is capable of doing.

### SUMMARY

It is thus an object of embodiments of the present invention to propose methods and devices for routing a request, which do not show the inherent shortcomings of the prior art.

Accordingly, embodiments relate to a method for routing a request in a network comprising a plurality of server devices configured for processing said request, executed by a request routing device, comprising:
- receiving a request from a client device, wherein said request is associated with a request type out of a plurality of request types, wherein different load level thresholds are associated with respective request types,
- for one or more server devices, determining whether said server device is available for processing said request in function of a comparison between a load level of said server device and a load level threshold associated with said request type,
- controlling routing of the request to one of the server devices for which it has been determined that said server device is available for processing said request.

The load level may specify at least one of: a CPU utilization, a disk utilization, a bandwidth utilization.

The plurality of request types may correspond to a plurality of priority levels, wherein the higher the priority level, the higher the corresponding load level threshold.

In some embodiments, the plurality of request types correspond to a plurality of services, and determining whether said server device is available for processing said request comprises:
- for a request associated with a first service, comparing a first set of load levels with corresponding load level thresholds,
- for a request associated with a second service, comparing a second set of load levels with corresponding load level thresholds, wherein the first set of load levels is different from the second set of load levels.

In some embodiments, the request is a request for content, and said server devices are configured for sending a requested content in response to a request.

In some embodiments, the first service is a live or linear video service and wherein said first set of load levels consists of CPU utilization, and wherein said second service is a video on demand service and wherein said second set of load levels consists of CPU utilization and Disk utilization.

The method may comprise receiving load level data from at least one of the server devices.

Embodiments also relate to a computer program comprising instructions for performing the method mentioned before when said instructions are executed by a computer.

Embodiments also relate to a request routing device for routing a request in a network comprising a plurality of server devices configured for processing said request, the request routing device comprising means configured for performing the method mentioned before.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for content delivery,
Figure 2 is a flowchart of a method for routing a request in the system of figure 1,
Figure 3 is a decision diagram which may be used in the method of Figure 2,
Figures 4 et 5 are graphs illustrating an example behavior of content server devices in the network of Figure 1, and
Figure 6 is a structural diagram of a request routing device of the system of Figure 1.

### DESCRIPTION OF EMBODIMENTS

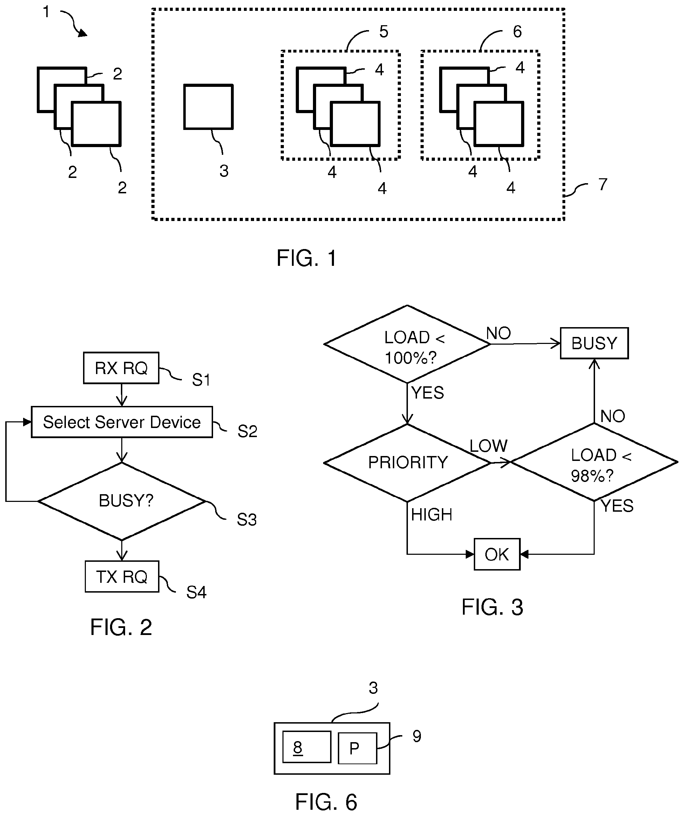

**Figure 1** is a block diagram of a system 1 for content delivery. The system 1 comprises one or more client devices 2 and a content delivery network 7. The content delivery network 7 comprises one or more request routing devices 3 and a plurality of server devices 4. The system 1 comprises a telecommunication network (not shown) and the client devices 3, the request routing device 3 and the server devices 4 are configured for intercommunication using the telecommunication network. The system 1 is configured for delivery of content from the server devices 4 to the client devices 2.

A server device 4 is configured for sending content in response to a request. A server device 4 may store content in a local content store and/or obtain content from another server device 4, for example through a caching mechanism.

In the content delivery network 7, at least one content item is available from at least two server devices 4. This means that a client device 2 may obtain this duplicate content item by sending a request which will be routed to any of the appropriate server devices 4. The request routing device 3 is configured for controlling the routing of requests from client devices 2 to one of the server devices 4. The request routing device 3 is configured to determine whether a server device 4 is available or busy, and to determine which is the "best" available server device 4 for processing the request. For example, the server devices 4 are grouped in an edge group 5 located near client devices 2 and a central group 6 located further away from the client devices 2. The request routing device 3 preferably routes request to the edge group 5.

In the system 1, a request from a client device 2 is associated with a request type. The request type may correspond to a type of service, a priority level or a combination thereof. For example, the server devices 4 are video server configured for delivering two types of video service: linear (or live) video and video-on-demand. Prioritization may be based for example on network capacity. The request routing device 3 takes into account the request type, as described in more details hereafter.

**Figure 2** is a flowchart of a method for routing a request, executed by the request routing device 3.

The request routing device 3 receives a request RQ from a client device 2 (step S1). The request RQ is associated with a request type, for example "High priority" or "Low priority".

Then, the request routing device 3 selects a server device 4 for processing the request RQ (step S2). The selected server device 4 is the "best" server device 4 according to some metrics, based for example on distance from the client device 2, latency...

Then, the request routing device 3 determines whether the selected server device 4 is available or busy (step S3). For this, the request routing device 3 takes into account the request type and at least one load level of the selected server device 4. More specifically, the request routing device 3 determines whether the selected server device 4 is available or busy by comparing the load level with a threshold associated with the request type. A load level is representative of utilization of a resource of the server device 4, for example a subcomponent of the server device 4. More specifically, the load level may be representative of the total utilization of a resource, meaning by all types of request, and the case may be by other tasks. Example of load levels include CPU utilization, network bandwidth utilization and disk utilization. The load levels and thresholds may be expressed for example in percentage of a reference value. The request routing device 3 may receive load level data from the server devices 4.

If the selected server device 4 is busy, the request routing device 3 repeats steps S2 and S3 by selecting another server device 4. This may be for example the next "best" server device 4 according to the metrics mentioned before or according to a predefined order. Preferably, the request routing device 3 selects the server devices 4 of the edge group 5 before selecting the server devices 4 of the central group 6. If all the server devices 4 are busy, the request routing device 3 may send an "unavailable" message to the client device 2.

In contrast, if the selected server device 4 is available, the request routing device 3 controls the routing of the request RQ to the selected server device 4 (step S4). This may include forwarding the request RQ to the selected server device 4 and/or other routing mechanism such as DNS-based mechanisms.

In a first example, the request type may be "High priority" or "Low priority". One load level is considered, for example CPU utilization or disk utilization. A first threshold, for example 100% of a reference value, is associated with the "High priority" request type, and a slightly lower threshold, for example 98% of the reference value, is associated with the "Low priority" request type. The request routing device 3 determines that the server device 4 is available for a high priority request if (and only if) the load level is below 100% and that the server device 4 is available for a low priority request if (and only if) the load level is below 98%. These rules may be represented in various forms, such as a table, a flowchart, a decision diagram... An example is illustrated on **Figure 3****.**

We assume that respective client devices 2 regularly send new requests RQ of both types and that some client devices 2 disconnect from the service. This is the case for example with On Demand viewing which is generally not temporally synchronized between users. This means that there is a constant stream of new clients making a connection to watch a program, and equally a constant stream of clients disconnecting and closing their connection.

If new lower priority connections were stopped from being directed to a server device 4 under load, but higher priority connections were still directed then over time the ratio of high to lower priority connections would shift towards more higher priority connections, they would be prioritized with the lower priority connections ending up being directed to an alternative group of server device 4.

In this example, this effect may be achieved by using very marginally different threshold for the two types of requests: the high priority service has a threshold of 100% of the reference value, whilst the lower priority service may have a threshold value of just 2% lower (98%). If no higher priority traffic were being offered, then the lower priority traffic would still consume 98% of that resource (with the remaining 2% being a buffer for if new higher priority traffic starts to be offered). However, if the amount of high priority connection requests increases the server device 4 will rebalance to a new level allowing in the medium term (almost) all the high priority connections to be served from the edge group with (mostly) just lower priority connections being redirected to the 'central' group.

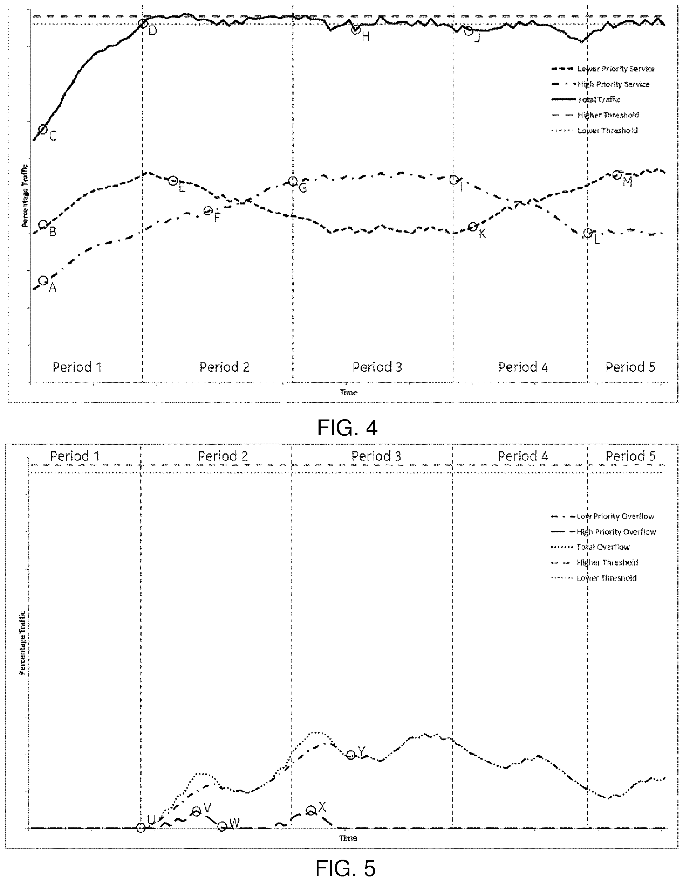

This is illustrated on the graphs of Figures 4 and 5.

**Figure 4** is a graph illustrating the network bandwidth utilization (expressed in percentage of a reference value) of a server device 4 of the edge group 5 over time. Initially, the server device 4 may be serving a mix of traffic consisting of a high priority service (Point A) and a lower priority service (Point B), these put a total load level on the server device 4 as shown by point C. During this Period 1 of operation more connections are being made on both the lower and high priority service and therefore the total traffic and resource load on the system is increasing. At point D the total resource load on the system has breached a threshold for the lower priority service. Whilst the resource load is between the lower and higher threshold no new connections will be direct to that server device 4 for the lower priority service, however the high priority service will continue to have new connections being made. The result of this is during Period 2 the net number of connections (and therefore resource load) of the lower priority service (e.g. at Point E) will decrease, whilst the higher priority service (e.g. at point F) is continuing to rise. At point G the traffic for the new connection rate for the higher priority service stabilizes, clients are no longer connecting faster than they are leaving. During Period 3 traffic prioritization has been successful, all the traffic for the High Priority service is being handled, with the lower priority service making up the rest of the load. The machine will be operating under near full load, but because the high priority service traffic isn't growing the load will occasionally fall below the lower threshold (point H) allowing an appropriate level of lower priority service connections to be handled.

If the demand for the high priority service decreases (point I) as can be seen in period 4, then the number of active connections for the high priority service will decrease, this will cause the total resource load to decrease below the lower threshold (point J), which will permit the number of lower priority service connections to increase (point K). Over time the high priority service may drop to a new equilibrium value (point L), whilst the lower priority service will be allowed to increase its number of connections (point M) up to a point where again an equilibrium is reached and the resources are being fully utilized (point N).

**Figure 5** is a graph illustrating the network bandwidth utilization (expressed in percentage of a reference value) of a server device 4 to which traffic from the server device 4 of Figure 4 is overspilled (most likely more centrally located if the entire group is overloaded). With standard methods the high and lower priority service would overflow in equal amounts matching the traffic distribution experienced on the edge server device 4. In contrast, in this example, the system 1 may achieve the effect that the majority of the traffic overflowing will be for the lower priority service.

During period 1 no traffic is overflowing from the edge server device 4 as the resource usage haven't currently reached the thresholds. At point U traffic starts to overflow from the edge server device 4. Initially, this is just low priority traffic, but if the rate of increase is too high then some higher priority traffic will overflow (point V) until the equilibrium is reached. Whilst equilibrium is being reached there may be some fluctuation in the amount of the higher priority service overflowing (Points W and X) however long term in general only the lower priority traffic overflows, as shown at point Y where the lines for total overflowed traffic and overflowed lower priority traffic converge.

In a second example, the request types correspond to at least two different services, and more than one load level is considered, depending on the service. Moreover, the request types may correspond to various priorities.

For example, the server devices 4 are configured for delivering two services, namely a live (or linear) video service, and a video on demand service. The live video service may have two priority levels: High and low. The video on demand service may have three priority levels: High, medium and low. This correspond to seven request types. The request routing device 3 may consider two load levels: CPU usage and Disk usage. This correspond to various thresholds as illustrated in the following table:

| Service | CPU threshold | Disk Threshold |
|---|---|---|
| High Live | 100 | N/A |
| Low Live | 96 | N/A |
| High VOD | 100 | 100 |
| Mid VOD | 98 | 98 |
| Low VOD | 95 | 96 |

The High priority live service is given the highest possible threshold for CPU usage, and because live traffic doesn't utilize disk resources the disk threshold is not applied, this is also true for the Low Priority Live service which has a lower CPU threshold to allow the High Priority Live service to take resources over it.

The relative priority of each service is weighted by minor adjustment of the threshold values, so, for instance, Low priority VOD has the lowest priority level of all services, as it's CPU threshold is lower than that of the Low Priority Live, and the disk threshold is lower than all the other services.

When a request routing operation is performed the appropriate thresholds are selected for that service. These thresholds are each compared against the server devices 4 current load on each resource, if any resource is exceeding the appropriate threshold then the server device 4 is considered 'busy' for that service and the client device 3 will be directed to an alternative server device 4 (or rejected if no resource is available in the network). As discussed previously, the desired long term behavior will emerge, with lower priority traffic (that would be marked as busy) draining away, whilst new higher priority traffic would be accepted. This creates a shift in the relative ratios of the traffic being serviced with the higher priority traffic getting the greatest share of resources. Multiple layers of priority can be created, so the Low VOD service will drain soonest before significant amounts of Mid VOD is redirected, but if the load continues to increase Mid VOD will drain ahead of the High priority VOD service being impacted.

The following table shows the behavior of the mechanism if a new connection arrives at different load combinations:

| Scenario | CPU Load | Disk Load | High Live | Low Live | High VOD | Mid VOD | Low VOD |
|---|---|---|---|---|---|---|---|
| 1 | 20 | 50 | OK | OK | OK | OK | OK |
| 2 | 30 | 95 | OK | OK | OK | OK | OK |
| 3 | 42 | 96 | OK | OK | OK | OK | BUSY |
| 4 | 50 | 99 | OK | OK | OK | BUSY | BUSY |
| 5 | 55 | 100 | OK | OK | BUSY | BUSY | BUSY |
| 6 | 90 | 100 | OK | OK | BUSY | BUSY | BUSY |
| 7 | 99 | 100 | OK | BUSY | BUSY | BUSY | BUSY |
| 8 | 99 | 99 | OK | BUSY | OK | BUSY | BUSY |
| 9 | 97 | 90 | OK | BUSY | OK | OK | BUSY |
| 10 | 95 | 90 | OK | OK | OK | OK | BUSY |

In scenario 1, the current server device 4 load on CPU (20%) and Disk (50%) are below the configured threshold for each of the defined services, none of the service are therefore considered as busy and all new connections would be directed to the server device 4. Scenario 2 demonstrates that the load on the machine has increased, in this scenario the load on the disk resource has increased much more significantly than the load on CPU resource; there is no reason that the rate of increases would be across all resource types. In this case it signifies that there has been an increase in VOD traffic (which more heavily impacts the disk resource).

In scenario 3 the load has continued to increase with the disk resource threshold for the Low VOD service being exceeded. This will cause the Low VOD service to be considered busy and no additional new connections for the Low VOD service will be directed to this server device 4. Over time existing Low VOD connections will drain away, and, if the resource loads stay static, other services will be prioritized over it and increase their share of the machine resources. Scenario 4 demonstrates the VOD resource load (from High Vod and Mid VOD) continuing to increase, this then exceeds the Mid VOD threshold, the CPU resource usage is still relatively low so Live traffic is still being accepted, as is the High priority VOD load.

Scenario 5 shows the disk resource being fully saturated at 100%, this causes all VOD services to be considered busy (until such a time as enough connections drain away to reduce the resource load below 100%), despite being considered a low priority service, the Low Live is still directed to the server device 4 as it doesn't depend upon the disk resource and therefore this server device 4 is still the best device to serve clients using that service. Scenarios 6 and 7 shows what would happen if the live traffic were to continue to increase, in scenario 7 VOD traffic would be rejected due to the disk thresholds being exceeded (meaning a maximum amount of the High priority VOD would be being processed in the long term), whilst the Low Live service would also be rejected due to the CPU threshold being exceeded. As scenario 8 shows, if some VOD connections drained away, dropping the disk resource usage below 100%, new High priority VOD connections would be accepted, alongside the High Priority Live service as both have the same CPU thresholds and so are considered of equal priority.

Scenario 9 demonstrates how, when the disk resource usage drops, additional Mid VOD traffic would be accepted, prioritized over the Low Live service which is still considered busy due to the CPU threshold being exceeded. Scenario 10 shows a slight drop in all resource usages, the Low VOD service is now the only service considered busy, in this case this is due to the CPU threshold being exceeded even though there is sufficient disk resource available, this allows the Low Live service to achieve the higher priority that it has been allocated.

Through the interaction of the described method over time effective and flexible prioritization of services is achieved whilst still efficiently using the available resources on the server devices 4 and with minimal complexity or overhead that would be required to attempt to allocate resource usages to individual requests.

The embodiments described before relates to content delivery, and the routing of requests for content. Other embodiments may relate to routing of requests of other types, such as request for data processing, storing, editing, communication. In some embodiments, the selection of a "best" server device 4 (step S2) is based for example on load balancing criteria.

**Figure 6** is a structural view of request routing device 3, which comprises a processor 8 and a memory 9. The memory 9 stores a computer program P which, when executed by the processor 8, causes the request routing device 3 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

## Claims

1. Method for routing a request (RQ) in a network comprising a plurality of server devices (4) configured for processing said request, executed by a request routing device (3), comprising:
- receiving (S1) a request (RQ) from a client device (2), wherein said request is associated with a request type out of a plurality of request types, wherein different load level thresholds are associated with respective request types,
- for one or more server devices (4), determining (S3) whether said server device (4) is available for processing said request in function of a comparison between a load level of said server device and a load level threshold associated with said request type,
- controlling (S4) routing of the request to one of the server devices for which it has been determined that said server device is available for processing said request.

2. Method according to claim 1, wherein said load level specifies at least one of: a CPU utilization, a disk utilization, a bandwidth utilization.

3. Method according to one of claims 1 and 2, wherein said plurality of request types correspond to a plurality of priority levels, and wherein the higher the priority level, the higher the corresponding load level threshold.

4. Method according to one of claims 1 to 3, wherein said plurality of request types correspond to a plurality of services, and wherein determining whether said server device is available for processing said request comprises:
- for a request associated with a first service, comparing a first set of load levels with corresponding load level thresholds,
- for a request associated with a second service, comparing a second set of load levels with corresponding load level thresholds, wherein the first set of load levels is different from the second set of load levels.

5. Method according to one of claims 1 to 4, wherein said request is a request for content, and said server devices are configured for sending a requested content in response to a request.

6. Method according to claim 4 and 5, wherein said first service is a live or linear video service and wherein said first set of load levels consists of CPU utilization, and wherein said second service is a video on demand service and wherein said second set of load levels consists of CPU utilization and Disk utilization.

7. Method according to one of claims 1 to 6, comprising receiving load level data from at least one of the server devices.

8. Computer program (P) comprising instructions for performing the method of one of claims 1 to 7 when said instructions are executed by a computer.

9. Request routing device (3) for routing a request (RQ) in a network comprising a plurality of server devices (4) configured for processing said request, the request routing device (3) comprising means configured for performing the method of one of claims 1 to 7.
